(19) Europäisches Patentamt
European Patent Office
Office européen des brevets

(11) **EP 2 822 825 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **13709357.1**

(22) Anmeldetag: **05.03.2013**

(51) Int Cl.:
*B60T 8/36* (2006.01)     *B60T 8/40* (2006.01)

(86) Internationale Anmeldenummer:
**PCT/EP2013/054360**

(87) Internationale Veröffentlichungsnummer:
**WO 2013/131889 (12.09.2013 Gazette 2013/37)**

(54) **VERFAHREN ZUM BETREIBEN EINER BREMSANLAGE SOWIE BREMSANLAGE**

METHOD FOR OPERATING A BRAKE SYSTEM, AND BRAKE SYSTEM

PROCÉDÉ DE FONCTIONNEMENT D'UN SYSTÈME DE FREINAGE ET APPAREIL DE FREINAGE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2012 DE 102012203493**
**04.03.2013 DE 102013203589**

(43) Veröffentlichungstag der Anmeldung:
**14.01.2015 Patentblatt 2015/03**

(73) Patentinhaber: **Continental Teves AG & Co. oHG 60488 Frankfurt (DE)**

(72) Erfinder: **FEIGEL, Hans-Jörg Rosbach 61191 (DE)**

(56) Entgegenhaltungen:
**WO-A1-03/068574        WO-A1-2005/054028
WO-A1-2005/063539        WO-A1-2007/042349
WO-A1-2011/029812        DE-A1- 4 016 754
DE-A1-102011 075 295**

**Beschreibung**

Die Erfindung betrifft ein Verfahren zum Betreiben einer Bremsanlage für Kraftfahrzeuge gemäß dem Oberbegriff des Anspruchs 1 sowie eine Bremsanlage für Kraftfahrzeuge gemäß dem Oberbegriff des Anspruchs 14.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der DE 101 47 181 A1 ist eine elektrohydraulische Brake-by-wire Bremsanlage mit Radbremsen, einer elektrisch ansteuerbaren Hilfsdruckquelle sowie analog ansteuerbaren Einlass- und Auslassventilen bekannt. Ein Verfahren zur Ansteuerung der analogen Auslassventile wird nicht offenbart.

Eine Brake-by-wire Bremsanlage mit einem Linearaktuator als elektrisch ansteuerbare Druckbereitstellungseinrichtung ist aus der WO 2011/029812 A1 bekannt. Die Bremsanlage umfasst keine analogisierten oder analog angesteuerten Auslassventile.

In der WO 2007/042349 A1 wird ein Verfahren zur Bestimmung eines Radbremsdruckes in einem Bremssystem beschrieben. Zunächst wird ein Kalibrierverfahren für das der entsprechenden Radbremse zugeordnete Auslassventil durchgeführt, wobei der dazu notwendige Druck als Vordruck vom Fahrer über den Hauptbremszylinder bereitgestellt wird. Mit dem Kalibrierverfahren wird die Öffnungsstromkennlinie des Auslassventils bestimmt. Dann wird zur Bestimmung des Radbremsdruckes während einer ABS-Regelung das Auslassventil kurzzeitig geöffnet durch Ansteuerung mit einer Stromrampe, wobei der zum gerade Öffnen des Auslassventils notwendige Öffnungsstrom bestimmt wird. Anhand des so bestimmten Öffnungsstroms und der zuvor ermittelten Öffnungsstromkennlinie wird der Radbremsdruck berechnet.

In der WO 2005/05028 A1 wird ein Kalibrierverfahren zur Bestimmung der Öffnungsstromkennlinie eines Einlassventils mit Hilfe einer Pumpe offenbart.

Es ist Aufgabe der vorliegenden Erfindung, ein Verfahren zum Betreiben einer Bremsanlage sowie eine Bremsanlage bereitzustellen, welches/welche einen fein dosierten und präzisieren Abbau eines Radbremsdrucks ermöglicht. Dabei soll aus Komfortgründen die Geräuschentwicklung möglichst gering sein.

Diese Aufgabe wird erfindungsgemäß durch ein Verfahren gemäß Anspruch 1 und eine Bremsanlage gemäß Anspruch 14 gelöst.

Der Erfindung liegt der Gedanke zugrunde, dass für das analogisierte oder analog angesteuerte Auslassventil mittels der Bremsanlage zumindest eine ventilspezifische Ansteuercharakteristik bestimmt wird. Zum Abbau des Bremsdrucks in der dem Auslassventil zugeordneten Radbremse wird dann das analogisierte oder analog angesteuerte Auslassventil in Abhängigkeit der ventilspezifischen Ansteuercharakteristik angesteuert.

Um eine geeignete Ansteuergröße für jeden Solldruckverlauf wählen zu können, wird ein Ansteuerkennfeld, welches den Volumenstrom durch das Auslassventil in Abhängigkeit der Ansteuergröße des Auslassventils und des Bremsdrucks der dem Auslassventil zugeordneten Radbremse beschreibt, mittels der Druckbereitstellungseinrichtung bestimmt.

Bevorzugt wird für das analogisierte oder analog angesteuerte Auslassventil mittels der Bremsanlage zumindest ein ventilspezifischer Parameter bestimmt. Zum Abbau des Bremsdrucks in der dem Auslassventil zugeordneten Radbremse wird dann das analogisierte oder analog angesteuerte Auslassventil in Abhängigkeit des ventilspezifischen Parameters angesteuert.

Die ventilspezifische Ansteuercharakteristik oder der ventilspezifische Parameter spiegelt die ventilspezifischen Reibungsverhältnisse in dem Auslassventil wieder und ermöglicht so bei ihrer/seiner Berücksichtigung bei der Ansteuerung eine präzise Druckabbausteuerung.

Bevorzugt sind die Einlassventile jeweils zwischen der Druckbereitstellungseinrichtung und der zugeordneten Radbremse angeordnet, so dass mittels des Einlassventils eine Verbindung zwischen der Radbremse und der Druckbereitstellungseinrichtung verbindbar bzw. trennbar ist.

Die Bremsanlage umfasst bevorzugt je Radbremse ein analogisiertes oder analog angesteuertes Einlassventil, so dass auch ein präziser, radindividueller Bremsdruckaufbau durchgeführt werden kann.

Bevorzugt leiten die Einlassventile im nicht angesteuerten Zustand die jeweiligen Bremskreisdrücke weiter (stromlos offen).

Die Auslassventile sind jeweils zwischen der zugeordneten Radbremse und einem Druckmittelvorratsbehälter angeordnet, so dass die Radbremse mit dem Druckmittelvorratsbehälter verbunden werden kann.

Bevorzugt sind die Auslassventile im nicht angesteuerten Zustand in einem gesperrten Zustand (stromlos geschlossen).

Bevorzugt wird eine synchrone, radindividuelle Druckabbausteuerung an zwei oder mehr Radbremsen durchgeführt. Daher umfasst die Bremsanlage bevorzugt je Radbremse ein analogisiertes oder analog angesteuertes Auslassventil.

Gemäß einer bevorzugten Ausführungsform des erfindungsgemäßen Verfahrens wird mittels der Druckbereitstellungseinrichtung und einer den Druck der Druckbereitstellungseinrichtung messenden Druckerfassungseinrichtung eine ventilspezifische Öffnungskennlinie des Auslassventils bestimmt.

Die Öffnungskennlinie beschreibt die Ansteuergröße zum Öffnen des Auslassventils in Abhängigkeit des Bremsdrucks der dem Auslassventil zugeordneten Radbremse.

Ebenso wird bevorzugt mittels der Druckbereitstellungseinrichtung und einer den Druck der Druckbereitstellungseinrichtung messenden Druckerfassungseinrichtung eine ventilspezifische Schließkennlinie des Auslassventils bestimmt. Die 'Schließkennlinie beschreibt die Ansteuergröße zum Schließen des Auslassventils in Abhängigkeit des Bremsdrucks der dem Auslassventil zugeordneten Radbremse.

Zum Abbau des Bremsdrucks wird das Auslassventil bevorzugt abwechselnd für eine erste Zeitdauer mit einem Wert der Ansteuergröße gleich oder oberhalb des Öffnungsstroms des Auslassventils und für eine zweite Zeitdauer mit einem Wert der Ansteuergröße unterhalb des Schließstroms des Auslassventils angesteuert. Der Wert der Ansteuergröße während der ersten Zeitdauer ist vorteilhafterweise gleich oder nur um einen geringen Betrag größer als der Öffnungsstrom, so dass Anschlaggeräusche des Ventils unterbunden oder zumindest verringert werden.

Bevorzugt ist für die zweite Zeitdauer ein Wert vorgegeben, so dass ein sicheres Schließen des Auslassventils gewährleistet ist. Die erste Zeitdauer wird dagegen als ein ventilspezifischer Parameter mittels der Bremsanlage bestimmt, um bei der Ansteuerung das spezifische Verhalten des Auslassventils zu berücksichtigen.

Um durch eine ventilspezifische Ansteuerung eine möglichst präzise Einstellung des gewünschten Solldruckverlaufs zu erreichen, wird gemäß einer Weiterbildung der Erfindung die erste Zeitdauer in Abhängigkeit von einem ventilspezifischen, minimalen Druckgradient und einem gewünschten Solldruckgradient bestimmt.

Das von der Druckbereitstellungseinrichtung abgegebene Druckmittelvolumen oder der von der Druckbereitstellungseinrichtung abgegebene Volumenstrom ist bevorzugt ermittelbar. Hierzu ist besonders bevorzugt eine Lage- oder Positions-Erfassungseinrichtung in oder an der Druckbereitstellungseinrichtung vorgesehen, mittels welcher eine Position oder Lage der Druckbereitstellungseinrichtung charakterisierende Größe bestimmbar ist. Vorteilhafterweise ist dies ein Sensor zur Erfassung der Rotorlage eines Elektromotors der Druckbereitstellungseinrichtung oder ein Sensor zur Erfassung einer Pumpenposition. Anhand der Rotorlage bzw. der zeitlichen Änderung der Rotorlage kann das von der Druckbereitstellungseinrichtung abgegebene Druckmittelvolumen oder der abgegebene Volumenstrom einfach und genau bestimmt werden.

Das Ansteuerkennfeld wird bevorzugt mittels einer Geschwindigkeitsregelung der Druckbereitstellungseinrichtung bestimmt.

Zur Berücksichtigung des spezifischen Verhaltens des Auslassventils bei der Ansteuerung wird gemäß einer bevorzugten Ausführungsform des erfindungsgemäßen Verfahrens ein ventilspezifischer Mindest-Volumenstrom oder ein ventilspezifischer, minimaler Druckgradient des Auslassventils bestimmt. Der ventilspezifische Mindest-Volumenstrom oder der ventilspezifische, minimale Druckgradient des Auslassventils wird besonders bevorzugt für verschiedene Eingangsdrücke des Auslassventils, also für verschiedene Bremsdrücke der dem Auslassventil zugeordneten Radbremse, bestimmt.

Bevorzugt wird dann ein Solldruckgradient aus dem aktuellen Bremsdruck und einem vorgegebenen Solldruck der Radbremse bestimmt und mit dem Mindest-Volumenstrom oder dem minimalen Druckgradient verglichen, und in Abhängigkeit von dem Vergleich das Auslassventil angesteuert. Besonders bevorzugt wird der Wert der Ansteuergröße für das Auslassventil und/oder eine Dauer einer Ansteuerung des Auslassventils in Abhängigkeit von dem Vergleich gewählt. Eine einfache Berücksichtigung des spezifischen Ventilverhaltens wird dadurch erzielt, dass die erste Zeitdauer in Abhängigkeit von dem Vergleich zwischen Solldruckgradient und Mindest-Volumenstrom / minimalem Druckgradient bestimmt wird.

Gemäß einer vorteilhaften Weiterbildung der Erfindung wird zur Änderung des Bremsdrucks in der dem Auslassventil zugeordneten Radbremse das Einlassventil der Radbremse derart angesteuert, dass es geschlossen ist, aber überströmt werden kann, wobei alle anderen Einlassventile derart angesteuert werden, dass sie geschlossen sind und nicht überströmt werden können. Hierdurch kann das von der Druckbereitstellungseinrichtung abgegebenen Druckmittelvolumen eindeutig dieser Radbremse zugeordnet werden und somit über die Volumen-Druck-Kennlinie der Radbremse auf die erreichte Druckerhöhung geschlossen werden oder die gewünschte Druckerhöhung über eine gezielte Volumenverdrängung erreicht werden.

Das Auslassventil wird besonders bevorzugt mit einem Wert der Ansteuergröße etwa gleich oder um einen vorgegebenen (geringen) Betrag unterhalb des Öffnungsstroms angesteuert, so dass mittels der Druckbereitstellungseinrichtung ein Überströmen des Einlassventils und des Auslassventils der entsprechenden Radbremse möglich ist. Die Druckbereitstellungseinrichtung wird dann vorteilhafterweise derart angesteuert, dass der von der Druckbereitstellungseinrichtung abgegebene Volumenstrom größer als ein ventilspezifischer Mindest-Volumenstrom des Auslassventils ist. Damit soll sichergestellt werden, dass der gewünschte Radbremsdruck auch über die Ansteuerung des Auslassventils eingestellt wird.

Ein Vorteil der Erfindung liegt darin, dass eine radindividuelle analoge Druckabbausteuerung erzielt wird, welche bei geringer Geräuscherzeugung eine genaue Druckeinstellung ermöglicht.

Die Erfindung betrifft auch eine Bremsanlage, in der ein erfindungsgemäßes Verfahren durchgeführt wird.

Bevorzugt wird das Verfahren in einer Bremsanlage mit zwei oder mehr Bremskreisen durchgeführt, bei welcher jeder Bremskreis über eine hydraulische Verbindungsleitung mit einem, vorteilhafterweise stromlos offenen, Trennventil mit dem Hauptbremszylinder und über eine weitere hydraulische Verbindungsleitung mit einem, vorteilhafterweise stromlos geschlossenen, Zuschaltventil mit der Druckbereitstellungseinrichtung verbunden ist.

Die Bremsanlage umfasst bevorzugt einen Pedalwegsimulator, welcher dem Fahrzeugführer in der "Brake-by-wire"-Betriebsart ein angenehmes Bremspedalgefühl vermittelt. Der Pedalwegsimulator ist besonders bevorzugt hydraulisch ausgeführt und mit dem Hauptbremszylinder verbunden oder verbindbar. Pedalwegsimulator ist vorteilhafterweise mittels eines Simulator-Freigabeventils an- und abschaltbar ausgeführt.

Bevorzugt wird die Druckbereitstellungseinrichtung durch eine Zylinder-Kolben-Anordnung gebildet, deren Kolben durch einen elektromechanischen Aktuator betätigbar ist. Dabei wird vorteilhafterweise das von der Druckbereitstellungseinrichtung abgegebene oder aufgenommene Druckmittelvolumen mittels einer Wegerfassungseinrichtung oder einer Lagenerfassungseinrichtung bestimmt, welche eine eine Position oder Lage des Kolbens charakterisierende Größe erfasst. Vorteilhafterweise wird eine Rotorlage des elektromechanischen Aktuators der Druckbereitstellungseinrichtung erfasst. Anhand der Rotorlage kann das von der Druckbereitstellungseinrichtung abgegebene Druckmittelvolumen oder der abgegebene Volumenstrom der Druckbereitstellungseinrichtung bestimmt werden.

Alternativ ist es bevorzugt, dass die Druckbereitstellungseinrichtung durch eine Sechs-Kolben-Pumpe gebildet wird, welche einen Pumpenpositionssensor umfasst.

Bevorzugt handelt es sich um eine Bremsanlage für Kraftfahrzeuge, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Weitere bevorzugte Ausführungsformen der Erfindung ergeben sich aus den Unteransprüchen und der nachfolgenden Beschreibung anhand von Figuren.

Es zeigen schematisch

Fig. 1    eine beispielsgemäße Bremsanlage zur Durchführung eines erfindungsgemäßen Verfahrens,

Fig. 2    einen Ausschnitt der beispielsgemäßen Bremsanlage der Fig. 1 zur Erläuterung eines ersten Ausführungsbeispiels eines erfindungsgemäßen Verfahrens,

Fig. 3    beispielhafte Strom-Druck-Kennlinien eines analogen Auslassventils und eine beispielhafte Volumen-Druck-Kennlinie einer Radbremse,

Fig. 4    beispielhafte zeitliche Verläufe für ein beispielsgemäßes Verfahren zur analogen Druckabbau an einer Radbremse, und

Fig. 5    eine beispielsgemäße Ansteuerstrom-Volumenstrom-Kennlinie eines analogen Auslassventils.

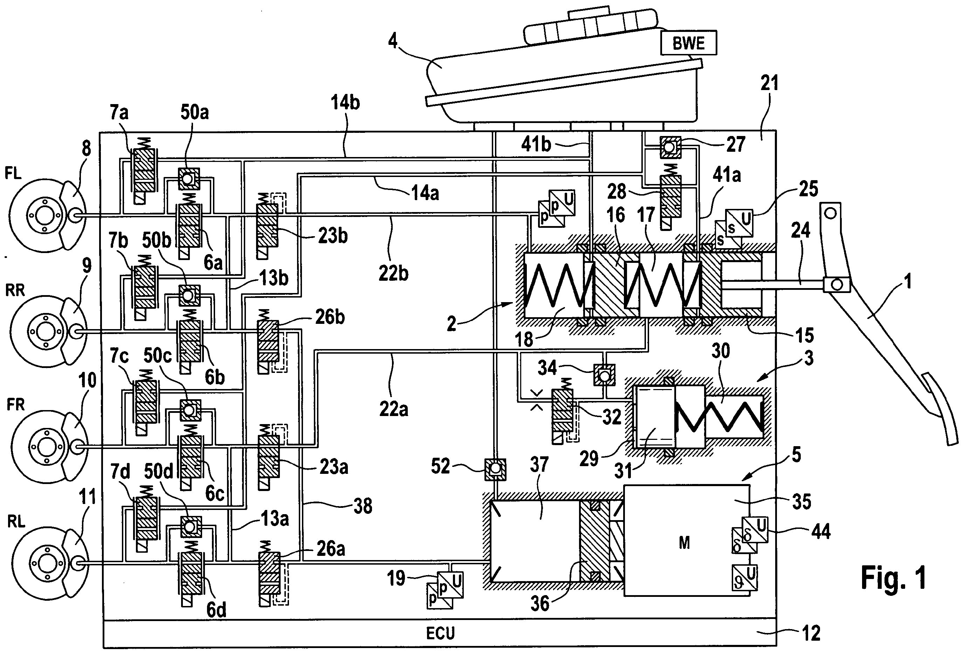

In Fig. 1 ist eine beispielsgemäße Bremsanlage zur Durchführung eines erfindungsgemäßen Verfahrens schematisch dargestellt. Die Bremsanlage umfasst im Wesentlichen eine mittels eines Betätigungs- bzw. Bremspedals 1 betätigbare hydraulische Betätigungseinheit 2, einen mit der hydraulischen Betätigungseinheit 2 zusammen wirkenden Wegsimulator bzw. Simulationseinrichtung 3, einen der hydraulischen Betätigungseinheit 2 zugeordneten, unter Atmosphärendruck stehenden Druckmittelvorratsbehälter 4, eine elektrisch steuerbare Druckbereitstellungseinrichtung 5, eine elektronische Steuer- und Regeleinheit 12 und eine elektrisch steuerbare Druckmodulationseinrichtung.

Die Druckmodulationseinrichtung umfasst beispielsgemäß je Radbremse 8, 9, 10, 11 eines nicht dargestellten Kraftfahrzeuges ein, vorzugsweise stromlos offenes, Einlassventil 6a-6d und ein, vorzugsweise stromlos geschlossenes, Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an einen Druckraum 37 der elektrisch steuerbaren Druckbereitstellungseinrichtung 5 angeschlossenen Systemdruckleitung 38 vorliegt. In einer Rückfallbetriebsart werden die Bremskreisversorgungsleitungen 13a, 13b über hydraulische Leitungen 22a, 22b mit den Drücken der Druckräume 17, 18 der Betätigungseinheit 2 beaufschlagt. Die Ausgangsanschlüsse der Auslassventile 7a-7d sind paarweise über Rücklaufleitungen 14a, 14b mit dem Druckmittelvorratsbehälter 4 verbunden. Die beiden Bremskreise sind beispielsgemäß diagonal aufgeteilt. Der erste Bremskreis (13a) umfasst die Radbremsen vorne rechts 10 (FR) und hinten links 11 (RL), der zweite Bremskreis (13b) die Radbremsen vorne links 8 (FL) und hinten rechts 9 (RR).

Beispielsgemäß ist den Einlassventilen 6a-6d jeweils ein zu den Bremskreisversorgungsleitungen 13a, 13b hin öffnendes Rückschlagventil 50a-50d parallel geschaltet. Die Rückschlagventile 50a-50d bewirken, dass ein Radbremsdruck nie höher als der Druck der Druckbereitstellungseinrichtung 5 ist. Dadurch kann - anders als in einer Bremsanlage mit Multiplexventilen - nicht mittels Druckabsenkung der Druckbereitstellungseinrichtung ein Radbremsdruck abgesenkt werden, ohne dass nicht gleich alle Radbremsdrücke ebenfalls abgesenkt werden.

Die Radbremsen 8-11 sind also jeweils über das Einlassventil 6a-6d mit der Druckbereitstellungseinrichtung trennbar verbunden. Jede Radbremse 8-11 ist mittels des Auslassventils 7a-7d mit dem Druckmittelvorratsbehälter 4 verbindbar. Dabei ist zumindest ein Auslassventil, beispielsgemäß jedes Auslassventil 7a-7d, als analogisiertes oder analog angesteuertes Ventil ausgeführt. Beispielsgemäß sind auch die Einlassventile 6a-6d als analogisierte oder analog angesteuerte Ventile ausgeführt.

Die hydraulische Betätigungseinheit 2 weist in einem Gehäuse 21 zwei hintereinander angeordnete Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Einlassventile 6a-6d an die Betätigungseinheit 2 angeschlossen ist. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-) Ventil ausgebildet ist. Durch die Trennventile 23a, 23b kann die hydraulische Verbindung zwischen den Druckräumen 17, 18 und den Bremskreisversorgungsleitungen 13a, 13b, z.B. in der Normalbremsfunktion / "Brake-by-wire"-Betriebsart, abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Wegsimulator 3 ist hydraulisch an den Hauptbremszylinder 2 angekoppelt und besteht im Wesentlichen aus einer Simulatorkammer 29, einer Simulatorfederkammer 30 sowie einem die beiden Kammern 29, 30 voneinander trennenden Simulatorkolben 31. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die elektrisch steuerbare Druckbereitstellungseinrichtung 5 ist beispielsgemäß als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Der Kolben 36 begrenzt einen Druckraum 37. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Druckmittelvorratsbehälter 4 über ein als in Strömungsrichtung zum Aktuator öffnendes Rückschlagventil ausgebildetes Nachsaugventil 52 in den Aktuatordruckraum 37 strömen kann.

Zur Erfassung einer für die Position/Lage des Kolbens 36 der Druckbereitstellungseinrichtung 5 charakteristischen Größe s ist ein Sensor 44 vorhanden, welcher beispielsgemäß als ein der Erfassung der Rotorlage des Elektromotors 35 dienender Rotorlagensensor ausgeführt ist. Andere Sensoren sind ebenso denkbar, z.B. ein Wegsensor zur Erfassung der Position/Lage des Kolbens 36. Anhand der für die Position/Lage des Kolbens 36 charakteristischen Größe ist eine Bestimmung des von der Druckbereitstellungseinrichtung 5 abgegebenen oder aufgenommenen Druckmittelvolumens V möglich. Zum Erfassen des von der Druckbereitstellungseinrichtung 5 erzeugten Bremssystemdruckes P ist ein vorzugsweise redundant ausgeführter Drucksensor 19 vorgesehen.

Das erfindungsgemäße Verfahren kann auch in einer an sich bekannten ESC-Bremsanlage mit Rückförderpumpe und einem Niederdruckspeicher je Bremskreis durchgeführt werden. Dazu wird bevorzugt eine 6-Kolbenpumpe mit Pumpenpositionssensor eingesetzt. Der Volumenstrom, der nicht durch das Auslassventil geht, würde das TCS-Ventil überströmen.

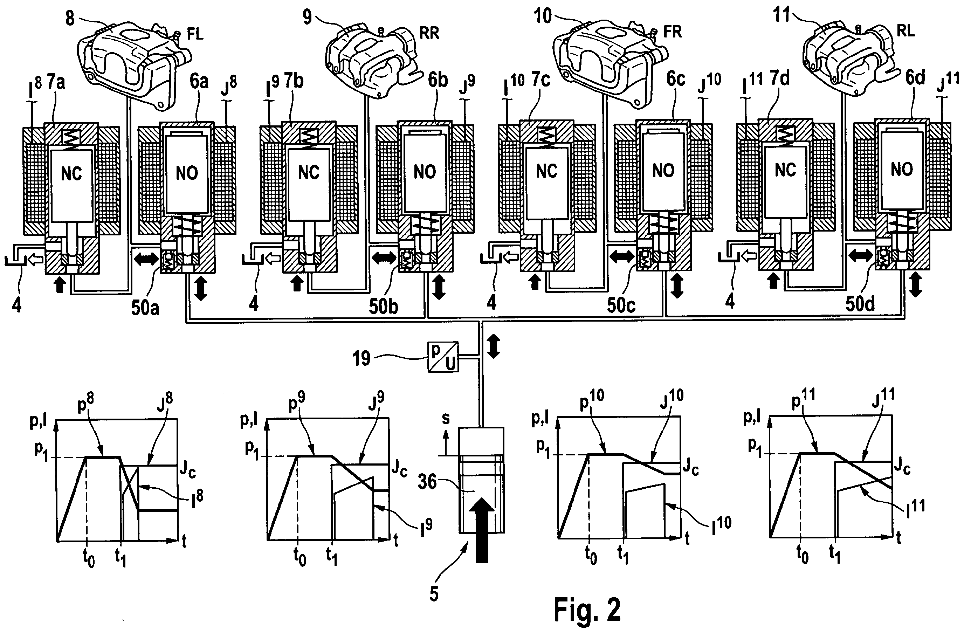

In Fig. 2 ist ein Ausschnitt der beispielsgemäßen Bremsanlage der Fig. 1 zur Erläuterung eines ersten Ausführungsbeispiels eines erfindungsgemäßen Verfahrens schematisch dargestellt. Es sind die Druckbereitstellungseinrichtung 5 mit Kolben 36, der Drucksensor 19 zur Bestimmung des Bremssystemdruckes P der Druckbereitstellungseinrichtung, die Radbremsen FL, RR, FR, RL bzw. 8, 9, 10, 11, die Einlassventile 6a-6d mit parallel geschalteten Rückschlagventilen 50a-50d, welche jeweils in der hydraulischen Verbindung zwischen Druckbereitstellungseinrichtung 5 und Einlassventil angeordnet sind, und die Auslassventile 7a-7d dargestellt, welche jeweils in der hydraulischen Verbindung zwischen Radbremse und Druckmittelvorratsbehälter 4 angeordnet sind. Unterhalb der jeweiligen Radbremse 8, 9, 10, 11 sind weiterhin Diagramme mit dem jeweiligen zeitlichen Verlauf der Ansteuergröße J der Einlassventile 6a, 6b, 6c, 6d, welche mit $J^8$, $J^9$, $J^{10}$, $J^{11}$ bezeichnet sind, der Ansteuergröße I der Auslassventile 7a, 7b, 7c, 7d, welche mit $I^8$, $I^9$, $I^{10}$, $I^{11}$ bezeichnet sind, sowie des Radbremsdrucks p der einzelnen Radbremsen 8, 9, 10, 11, welche mit $p^8$, $p^9$, $p^{10}$, $p^{11}$ bezeichnet sind und dem jeweiligen vorgegebenen Solldruckverlauf $p^n_{soll}$ (n=8-11) entsprechen, dargestellt. Beispielsgemäß werden die Auslass- und Einlassventile mit einem Strom angesteuert, weshalb im Folgenden der Begriff Ansteuerstrom I bzw. J verwendet wird.

Vom Zeitpunkt t=0 bis zum Zeitpunkt $t=t_0$ wird durch die Druckbereitstellungseinrichtung der Bremsdruck in allen Radbremsen 8, 9, 10, 11 gemeinsam und gleichzeitig von Null auf einen Wert $P_1$ aufgebaut und dann auf dem Druckniveau $P_1$ bis Zeitpunkt $t=t_1$ konstant gehalten. Es wird also beispielsgemäß von einem zunächst in allen Radbremsen 8, 9, 10, 11 gleichen Druck $P_1$ ausgegangen, welcher gleich dem Druck der Druckbereitstellungseinrichtung 5 ist. Danach sollen an den Radbremsen 8-11 radindividuelle Bremsdruckabbauverläufe durchgeführt werden. Diese radindividuellen Solldrücke bzw. zeitlichen Solldruckverläufe $p^n_{soll}$ (n=8, 9, 10 oder 11) für die Radbremsen 8, 9, 10, 11 werden, z.B. von einer Regelfunktion der Bremsanlage (z.B. einer Antiblockierfunktion (ABS: Antiblockiersystem), einer Fahrdynamikregelfunktion (ESC: Elektronic Stability Control), einer Abstandsregelfunktion (ACC: Active Cruise Control), o.ä.), vorgegeben. Zu Beginn der radindividuellen Bremsdruckregelung werden zum Zeitpunkt $t_1$ alle Einlassventile 6a, 6b, 6c, 6d geschlossen und dazu mit einem Ansteuerstromwert $J_c$ angesteuert, der das schließen und geschlossen bleiben der Einlassventile sicher stellt. Kurz nach dem Zeitpunkt $t_1$ werden die analogisierten oder analog angesteuerten Auslassventile 7a, 7b, 7c, 7d mit Ansteuerströmen $I^8$, $I^9$, $I^{10}$, $I^{11}$ beaufschlagt. Es wird eine radindividuelle, synchrone Druckabbausteuerung durchgeführt, wobei die Druckabbaudosierung je Radbremse mittels Drucksteuerung des analogen Auslassventils durchgeführt wird. Hierfür werden jeweils der vorgegebene Solldruck $p^n_{soll}$ und ein Ist-Raddruck $p^n$, der anhand eines Modells bestimmt wird, herangezogen.

Im Nachfolgenden werden beispielsgemäße Verfahren zur Bestimmung von für die Druckabbausteuerung eines Auslassventils relevanter Daten, insbesondere einer ventilspezifischen Ansteuercharakteristik (z.B. Kennlinie oder Kennfeld) oder eines ventilspezifischen Ansteuerparameters (z.B. Kennwertes), beschrieben. Die verschiedenen Ansteuercharakteristiken bzw. Ansteuerparameter werden bevorzugt nach diesen Verfahren in der Bremsanlage selbst bestimmt, es ist jedoch auch möglich, dass hierzu zumindest teilweise andere Verfahren herangezogen werden oder eine Ansteuercharakteristik bzw. ein Ansteuerparameter, z.B. in der elektronischen Steuer- und Regeleinheit 12, vorgegeben ist. Die beschriebenen Schritte müssen auch nicht unbedingt in der angegebenen Reihenfolge durchgeführt werden.

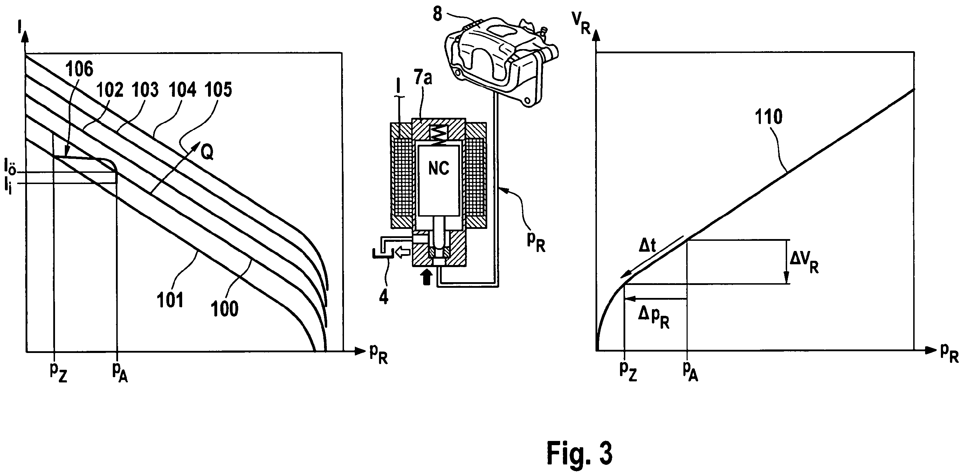

Unter Ansteuercharakteristik wird im engeren Sinne eine Abhängigkeit I(p bzw. $\Delta$p) der elektrischen Ventilansteuergröße (z.B. des Ansteuerstroms I) von dem an dem Ventil anliegenden Differenzdruck ($\Delta$p) bzw. von einem an dem Ventil anliegenden Druck (p) (bei konstantem Druck an dem anderen Ventilanschluss) verstanden (z.B. Strom-Druck-Kennlinie (I/p-Kennlinie), Öffnungskennlinie, Schließkennlinie). Die Ansteuercharakteristik ist zudem von dem Volumenstrom Q durch das Ventil abhängig, so dass eine vollständige Beschreibung eines Ventils durch eine Ansteuercharakteristik I(p bzw. $\Delta$p, Q) (z.B. in Form eines Strom-Druck-Kennfeldes mit Parameter Volumenstrom, Arbeitsstromkennfeld, siehe Fig. 3 links) bzw. Q(I, p bzw. $\Delta$p) (Volumenstrom-Kennfeld) gegeben ist.

In der Mitte der Fig. 3 ist die im Folgenden exemplarisch betrachtete Radbremse 8 abgebildet, welche über das analog ansteuerbare Auslassventil 7a, das mittels des Ansteuerstroms I angesteuert wird, mit dem Druckmittelvorratsbehälter 4 verbindbar ist. Im linken Diagramm der Fig. 3 sind beispielshafte Strom-Druck-Kennlinien eines analogen Auslassventils dargestellt. Aufgetragen ist dabei der Ansteuerstrom I (Ventilstrom) des Auslassventils gegen den Radbremsdruck $p_R$. Da der ausgangsseitige Druck an dem Auslassventil etwa gleich Atmosphärendruck $p_{atm}$ ist (Druckmittelvorratsbehälter 4), kann anstelle der sonst üblicherweise verwendeten Druckdifferenz $\Delta$p über dem Ventil der Radbremsdruck $p_R$ ($\Delta$p= $p_R$-$p_{atm}$) als Variable für die Kennlinien verwendet werden. Das linke Diagramm zeigt eine Öffnungsstromkennlinie 100, eine Schließstromkennlinie 101 sowie mehrere Strom-Druck-Kenlinien 102, 103, 104 für konstanten Volumenstrom Q, wobei die Größe des Volumenstroms Q von der Öffnungsstromkennlinie 100 weg ansteigt, was durch den Pfeil 105 angedeutet wird.

Zunächst wird ein beispielgemäßes Verfahren zum Kalibrieren eines Auslassventils, beispielsgemäß des Auslassventils 7a, hinsichtlich seiner Öffnungskennlinie beschrieben, welches in der Bremsanlage mittels der elektronischen Steuer- und Regeleinheit der Bremsanlage durchgeführt wird. Bei einem Bremssystemdruck P von 0 bar und geschlossenen Auslassventilen 7a-7d werden alle anderen Einlassventile 6b, 6c, 6d geschlossen, außer dem zu dem zu vermessenden Auslassventil 7a korrespondierenden Einlassventil 6a. Das Einlassventil 6a wird oder bleibt geöffnet. Der Ansteuerstrom I des Auslassventils 7a wird auf einen ersten vorgegebenen Wert $I_1$ eingestellt. Mittels der Druckbereitstellungeinrichtung 5 wird langsam (quasistatisch) ein Druckaufbau (von 0 bar aus) durchgeführt. Der Bremssystemdruck P, welcher aufgrund des geöffneten Einlassventils 6a gleich dem Radbremsdruck $p_R$ der Radbremse 8 ist, wird mittels des Drucksensors 19 überwacht. Wenn sich das Auslassventil öffnet, stellt sich ein quasistationäres Druckniveau ein, welches zu dem Ansteuerstromwert $I_1$ korrespondiert. Der zugehörige Druckwert $p_1$ wird zusammen mit dem Stromwert $I_1$ als Wertepaar, z.B. in der Steuer- und Regeleinheit 12, abgespeichert. Der in diesem Absatz beschriebene Vorgang wird dann für weitere Ansteuerstromwerte $I_2$, $I_3$, $I_4$, ... wiederholt. Aus den abgelegten Wertepaaren ($I_k$, $p_k$) wird eine Öffnungskennlinie $I_Ö(p_R)$ bestimmt, z.B. durch Inter- und/oder Extrapolation und Ablegen der inter- und/oder extrapolierten Werte in einer Wertetabelle oder durch Bestimmung eines funktionalen Näherungszusammenhangs $I_Ö=f_Ö(p_R)$. Eine beispielhafte Öffnungsstromkennlinie ist als Kurve 100 in dem linken Diagramm der Fig. 3 dargestellt.

Im Folgenden wird ein beispielgemäßes Verfahren zum Kalibrieren eines Auslassventils, beispielsgemäß des Auslassventils 7a, hinsichtlich seiner Schließkennlinie beschrieben, welches in der Bremsanlage durchgeführt wird. Bevorzugt werden alle anderen Einlassventile 6b, 6c, 6d geschlossen. Das Einlassventil 6a bleibt geöffnet. Das betrachtete Auslassventil 7a ist bzw. wird geschlossen. Mittels der Druckbereitstellungseinrichtung 5 wird ein, vorteilhafterweise hoher, Bremssystemdruck P aufgebaut, welcher dann auch in der zugehörigen Radbremse 8 vorliegt. Der Elektromotor der Druckbereitstellungseinrichtung 5 wird dann gestoppt, so dass kein Druckmittelvolumen durch die Druckbereitstellungseinrichtung verschoben werden kann. Der Ansteuerstrom des Auslassventils 7a wird sprunghaft auf einen ersten Wert $I_1$ erhöht. Bei einem ausreichend hohen Stromwert $I_1$ öffnet sich das Auslassventil 7a und der Druck in der Radbremse 8 baut sich ab. Der Ist-Druck in der Radbremse wird mittels des Drucksensors 19 überwacht. Bei sinkendem Radbremsdruck $p_R$ schließt das Auslassventil 7a bei einem gewissen Radbremsdruckwert $p_1$. Zu dem Stromwert $I_1$ stellt sich also ein quasistationäres Druckniveau ein. Das Wertepaar aus Stromwert $I_1$ und sich einstellendem Radbremsdruck $p_1$ wird abgespeichert. Die oben beschriebenen Verfahrensschritte werden dann für weitere Ansteuerstromwerte $I_2$, $I_3$, $I_4$, ... wiederholt. Aus den abgelegten Wertepaaren ($I_k$, $p_k$) wird eine Schließkennlinie $I_S(p_R)$ bestimmt, z.B. durch Inter- und/oder Extrapolation und Ablegen der inter- und/oder extrapolierten Werte in einer Wertetabelle oder durch Bestimmung eines funktionalen Näherungszusammenhangs $I_S=f_S(p_R)$. Eine beispielhafte Schließstromkennlinie ist als Kurve 101 in dem linken Diagramm der Fig. 3 dargestellt.

Weiter wird ein beispielgemäßes Verfahren zur Ermittlung des kleinsten (mittleren) Volumenstromwertes $Q_{min}$ bzw. des entsprechenden kleinsten (mittleren) Druckgradienten $\dot{p}_{min}$ für verschiedene Druckniveaus $p_R$ für ein Auslassventil, beispielsgemäß das Auslassventil 7a, beschrieben, welches in der Bremsanlage durchgeführt wird. Bevorzugt werden alle anderen Einlassventile 6b, 6c, 6d geschlossen. Das Einlassventil 6a bleibt geöffnet. Das betrachtete Auslassventil 7a wird oder ist geschlossen. Mittels der Druckbereitstellungseinrichtung 5 wird ein erster Bremssystemdruck, und damit Druck in der Radbremse 8, des Wertes $p^1_A$ eingestellt und eine Geschwindigkeitssteuerung der Druckbereitstellungseinrichtung 5 aktiviert. Die Geschwindigkeitssteuerung wird vorteilhafterweise mit einer Positionsregelung in Verbindung mit einem rampenförmigen Sollpositionsverlauf erzielt. Der Ansteuerstrom des Auslassventils 7a wird sodann langsam erhöht, so dass das Auslassventil irgendwann öffnet. Sobald eine Reduzierung des Druckes mittels des Drucksensors 19 erkannt wird, wird der aktuelle Stromwert ermittelt und konstant gehalten. Der weitere Druckverlauf wird beobachtet. Wenn sich ein neuer Druckwert $p^1_Z$ stabilisiert hat, wird die zum Ausgangsdruck $p^1_A$ entstandene Druckdifferenz $\Delta p_R = p^1_A - p^1_Z$ sowie die dafür benötigte Zeit $\Delta t$ ermittelt. Hieraus wird der für diesen Vorgang wirksame, mittlere Volumenstrom $Q_{min}$ gemäß

$$Q_{min} \ = \ (V(p^1_A) - V(p^1_Z))/\Delta t$$

bzw. der entsprechende Druckgradient $\dot{p}_{min}$ gemäß

$$\dot{p}_{min} = \Delta p_R/\Delta t \ = \ (p^1_A - p^1_Z)/\Delta t$$

bestimmt. Die Volumendifferenz $V(p^1_A)-V(p^1_Z)$ wird anhand der Volumen-Druck-Kennlinie der Radbremse aus dem gemessenen $\Delta p_R$ bestimmt.

Das beschriebene Vorgehen wird dann für weitere Ausgangsdrücke $p^2_A$, $p^3_A$, $p^4_A$, ... wiederholt.

In dem rechten Diagramm der Fig. 3 ist eine beispielsgemäße Volumen-Druck-Kennlinie 110 einer Radbremse dargestellt, welche den Zusammenhang zwischen dem Druckmittelvolumen $V_R$ in der Radbremse und dem Radbremsdruck $p_R$ widergibt. Die für das eben beschriebene Verfahren relevanten Größen $p_A$, $p_Z$, $\Delta p_R = p_A - p_Z$, $\Delta t$ und die zugehörige

Druckmittelabgabe $\Delta V_R$ der Radbremse sind zur Verdeutlichung eingezeichnet. Die Volumen-Druck-Kennlinien der Radbremsen 8-11 einer Bremsanlage können, z.B. bei der Produktion der Bremsanlage am Bandende, vermessen werden und werden als gegeben bzw. bekannt vorausgesetzt. Aus einem ermittelten Druckgradient $\Delta p_R/\Delta t$ kann mittels der Volumen-Druck-Kennlinie 110 die zugehörige Druckmittelabgabe pro Zeitintervall $\Delta V_R/\Delta t$ und so der mittlere Volumenstrom $\overline{Q}$ bestimmt werden.

Im Folgenden wird ein beispielgemäßes Verfahren zur Ermittlung des Volumenstrom-Kennfeldes eines Auslassventils, beispielsgemäß des Auslassventils 7a, beschrieben, welches in der Bremsanlage durchgeführt wird. Das Volumenstrom-Kennfeld Q(I,$\Delta p$) (bzw. Q(I,$p_R$)) beschreibt den Volumenstrom Q durch das Auslassventil in Abhängigkeit von dem Ansteuerstrom I des Auslassventils und der Druckdifferenz $\Delta p$ über dem Auslassventil bzw. dem Radbremsdruck $p_R$. Für einen fest vorgegebene Wert Q des Volumenstroms ergibt sich aus dem Volumenstrom-Kennfeld Q(I,$p_R$) eine Strom-Druck-Kennlinie I($p_R$), wie sie z.B. in dem linken Diagramm der Fig. 3 als Kennlinien 102, 103, 104 für verschiedene Werte des Volumenstroms Q dargestellt sind. Bei geschlossenen Einlassventilen 6b, 6c, 6d und geöffnetem Einlassventil 6a wird der Aktuator der Druckbereitstellungseinrichtung 5 in Geschwindigkeitsregelung betrieben, so dass der Volumenstrom Q vorgegeben und bekannt ist, und für verschiedene Ansteuerstromwerte $I_1$, $I_2$, $I_3$, ... der sich einstellende stationäre Druck P der Druckbereitstellungseinrichtung 5 mittels Drucksensor 19 gemessen, welcher dem Radbremsdruck $p_R$ entspricht. Die ermittelten Datenpaare werden als Kennfeld Q=f(I, $p_R$) abgespeichert, z.B. in der elektronischen Steuer- und Regeleinheit 12 der Bremsanlage.

Eine generelle Vorgehensweise zur Ansteuerung eines Auslassventils zur Durchführung eines Abbaus des Radbremsdruckes $p_R$ von einem Anfangswert $p_A$ auf einen Zielwert $p_Z$ wird anhand der Kurve 106 des linken Diagramms der Fig. 3 erläutert. Das Auslassventil wird zunächst mit einem Initialstromwert $I_i$ angesteuert, welcher unterhalb des Öffnungsstroms $I_Ö$ für den Druckwert $p_A$ liegt. Der Ansteuerstrom I wird dann, vorteilhafterweise knapp, über den Öffnungsstroms $I_Ö$ erhöht. Hierdurch kann das Auslassventil durch den Radbremsdruck aufgedrückt werden, d.h. das Auslassventil wird geöffnet und es kommt zu einem Radbremsdruckabbau. Erreicht der Radbremsdruck den Wert $p_Z$, bei welchem der Schließstrom (Kennlinie 101) dem gegebenen Wert des Ansteuerstroms entspricht, so schließt das Auslassventil wieder. In dem Diagramm ist nicht dargestellt, dass das Auslassventil anschließend mit einem Stromwert beaufschlagt wird, der unterhalb des Schließstroms $I_S$ (für den entsprechenden Radbremsdruck) liegt, um sicher zu stellen, dass das Auslassventil geschlossen wird. Damit wird eine die Messung verfälschende Leckage vermieden.

Bei Start einer radindividuellen Druckabbauregelung an einer Radbremse, z.B. Radbremse 8, wird beispielsgemäß wie folgt vorgegangen. Der anfängliche Ist-Druck $p_{ist}$ in der Radbremse wird mittels des Drucksensors 19 (bei geöffnetem Einlassventil 6a) ermittelt. Danach wird das Einlassventil 6a geschlossen. Im Weiteren wird der Ist-Druck anhand eines Modells vor bestimmt. Aus dem vorgegebenen, gewünschten Solldruckverlauf $p_{soll}$(t) wird der nächste gewünschte (geringere) Radsolldruck $p_{soll}$ bestimmt und der benötigte mittlere Solldruckgradient $\dot{p}_{soll}$ gemäß $\dot{p}_{soll}=(p_{ist}-p_{soll})/\Delta t$ bestimmt. Dies wird optional auch für den zeitlich darauf folgenden Radsolldruck $p_{soll2}$ durchgeführt. Der Solldruckgradient $\dot{p}_{soll}$ wird mit dem ermittelten (siehe oben), kleinsten Druckgradienten $\dot{p}_{min}$ des Auslassventils 7a verglichen.

Falls der Solldruckgradient $\dot{p}_{soll}$ kleiner als der minimale Druckgradient $\dot{p}_{min}$ ist, ist ein Schneiden des gewünschten Solldruckverlaufs sichergestellt (sog. "Regel"), da zumindest der minimale Druckabbau pro Zeitintervall $\dot{p}_{min}$ durchgeführt wird. Es wird die Zeitdauer $\Delta t_Ö$ bestimmt, welche die Dauer bestimmt, mit der das Auslassventil mit einem dem Solldruck $p_{soll}$ zugeordneten Öffnungsstrom $I_Ö$ angesteuert wird, welcher aus der zuvor bestimmten Öffnungsstromkennlinie $I_Ö(p_R)$ entnommen werden kann. Die Zeitdauer $\Delta t_Ö$ wird beispielsgemäß gemäß der Formel

$$\Delta t_Ö = \Delta p_{Soll}/(\dot{p}_{min} - ((p_{ist}-p_{soll})/\Delta t))$$

berechnet, wobei $\Delta p_{Soll}$ eine vorgegebene, maximal zulässige Druckabweichung ist (z.B. $\Delta p_{Soll}$=2 bar).

Falls der Solldruckgradient $\dot{p}_{soll}$ größer als der minimale Druckgradient $\dot{p}_{min}$ ist, ist das Schneiden des Solldruckverlaufs nicht sichergestellt. Deshalb ist das Auslassventil weiter zu öffnen. Für den erforderlichen Volumenstrom Q (entspricht etwas größerem Solldruckgradient $\dot{p}_{soll}$) wird der entsprechende Ansteuerstrom aus dem bestimmten Volumenstrom-Kennfeld Q(I,$p_R$) ausgewählt. Es wird die Zeitdauer $\Delta t_Ö$ bestimmt, welche die Dauer bestimmt, mit der das Auslassventil mit dem Solldruck $p_{soll}$ zugeordneten Öffnungsstrom $I_Ö$ angesteuert wird, welcher aus der zuvor bestimmten Öffnungsstromkennlinie $I_Ö(p_R)$ entnommen werden kann. Die Zeitdauer $\Delta t_Ö$ wird beispielsgemäß gemäß der Formel

$$\Delta t_Ö = \Delta p_{Soll}/(\dot{p}_{soll} - ((p_{ist}-p_{soll})/\Delta t))$$

berechnet, wobei $\Delta p_{soll}$ eine vorgegebene, maximal zulässige Druckabweichung ist (z.B. $\Delta p_{Soll}$=2 bar).

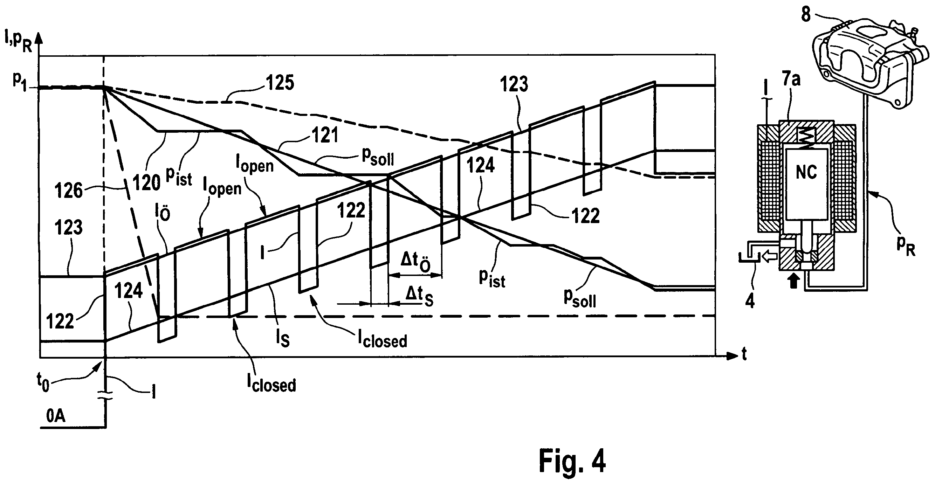

Damit sind die wesentlichen Steuerparameter, nämlich der einzusteuernde Ansteuerstromverlauf $I_{soll}$ = f ($\dot{p}_{soll}$) (insbesondere $I_{open}$= f ($\dot{p}_{soll}$) in Fig. 4) in Abhängigkeit des gewünschten Solldruckgradient sowie die Zeitdauer $\Delta t_{\ddot{O}}$, bestimmt. Die Zeitdauer $\Delta t_S$, in welcher das Auslassventil für ein sicheres Schließen mit einem Ansteuerstrom $I_{closed}$ unterhalb des Schließstroms $I_S$ (beide Größen sind abhängig vom aktuellen Radbremsdruck) beaufschlagt wird, ist vorgegeben. Sie kann z.B. experimentell ermittelt werden und ist dann festgelegt.

Das beschriebene Verfahren wird vorteilhafterweise für jedes Auslassventil 7a-7d und jeweils für verschiedene Solldruckgradient durchgeführt.

Mit den erhaltenen Kalibrierdaten, das sind im einzelnen Öffnungskennlinie, Schließkennlinie, Volumenstrom-Kennfeld, min. Druckgradient/Volumenstrom, $I_{soll}(\dot{p}_{soll})$, $\Delta t_{\ddot{O}}(\dot{p}_{soll})$, und Berechnungsregeln werden bevorzugt in der Bremsanlage probeweise Testdruckabbauvorgänge bei geschlossenen Einlassventilen der anderen Radbremsen und einem im Positionsregelkreis festgehaltenen Aktuator der Druckbereitstellungseinrichtung durchgeführt.

Vorteilhafterweises kann auch mit einem Fuzzy-Regler eine weitere Optimierung der Parameter ($I_{soll}(\dot{p}_{soll})$, $\Delta t_{\ddot{O}}(\dot{p}_{soll})$) vorgenommen werden, bis eine minimale Abweichung von dem gewünschten Solldruckverlauf erreicht wird.

Eine Regelung wird dann mit den gefundenen Parametern für jedes Auslassventil durchgeführt.

Vorteilhafterweise wird eine Änderung der Parameter nur im Rahmen von vorgegebenen Default-Grenzwerten durchgeführt, um Fehlberechnungen zu verhindern.

In Fig. 4 sind beispielhafte zeitliche Verläufe für ein beispielsgemäßes Verfahren zur analogen Druckabbau an einer Radbremse, beispielsgemäß der Radbremse 8, dargestellt. Es handelt sich um eine Druckabbausteuerung mit konstanter Schließpuls-Frequenz. In dem Diagramm sind als Funktion der Zeit t der Ist-Radbremsdruck $p_{ist}$ (Kurve 120), der Soll-Radbremsdruck $p_{soll}$ (Kurve 121), der Ansteuerstrom I des Auslassventils 7a (Kurve 122) und die entsprechenden Verläufe des Öffnungsstroms $I_{\ddot{O}}$ (Kurve 123) und des Schließstroms $I_S$ (Kurve 124) (da beides vom aktuellen Radbremsdruck abhängig) dargestellt. Bis zum Zeitpunkt $t_0$ ist das Auslassventil geschlossen (Ansteuerstrom I gleich 0 Ampere) und der Radbremsdruck beträgt den konstanten Wert $P_1$. Ab dem Zeitpunkt $t_0$ soll ein Bremsdruckabbau mit einem konstanten Solldruckgradienten durchgeführt werden, weshalb das zugehörige Einlassventil 6a geschlossen und das Auslassventil für eine Zeitdauer $\Delta t_{\ddot{O}}$ mit einem Ansteuerstrom $I_{open}$ ($I_{soll}$) oberhalb des Öffnungsstroms $I_{\ddot{O}}$ beaufschlagt wird. Der Ist-Druck $p_{ist}$ fällt entsprechend ab. Nach der Zeitdauer $\Delta t_{\ddot{O}}$ wird der Ansteuerstrom I für eine Zeitdauer $\Delta t_S$ auf Werte $I_{closed}$ unterhalb des Schwellenstroms $I_S$ abgesenkt (sog. Schließpuls), so dass das Auslassventil sicher schließt. Der Zyklus aus Ansteuerstrom I oberhalb des Öffnungsstroms $I_{\ddot{O}}$ für die Zeitdauer $\Delta t_{\ddot{O}}$ und anschließender Reduzierung auf einen Wert unterhalb des Schwellenstroms $I_S$ für die Zeitdauer $\Delta t_S$ wird dann wiederholt.

Um ein möglichst gutes Folgen des Solldruck-Verlaufs $p_{soll}(t)$ durch den Istdruck-Verlauf $p_{ist}(t)$ zu erzielen, ist die möglichst genaue Kenntnis der folgenden Größen von Vorteil:

- Genaue Kenntnis des Anfangsdruckes $P_1$ vor dem Druckabbau. Hierzu wird der Radbremsdruck bei geöffnetem Einlassventil mittels des Drucksensors 19 gemessen, danach erfolgt eine Bestimmung anhand eines Druckmodels.

- Genaue Kenntnis der Öffnungsstromkennlinie $I_{\ddot{O}}(p_R)$. Diese kann, z.B. wie oben beschrieben, im Betrieb hydraulisch kalibriert werden.

- Gute Kenntnis über den Volumenstrom Q des Auslassventils, d.h. des kleinsten Volumenstroms $Q_{min}$ (bzw. $\dot{p}_{min}$) nach dem Öffnen des Ventils und dem weiteren Volumenstrom($p_R$)-Ansteuerstrom-Kennfeld. Auch diese Größen können, z.B. wie oben beschrieben, im Betrieb hydraulisch kalibriert werden.

- Genaue Kenntnis des gewünschten Solldruckgradienten $\dot{p}_{soll}$.

Bevorzugt wird sichergestellt, dass der Istdruck-Gradient immer größer als der Solldruck-Gradient ist, d.h. dass ein Druckverlauf gemäß Kurve 125 vermieden wird.

Bevorzugt wird die Schließpuls-Frequenz so gewählt, dass keine großen Druckabweichungen dadurch entstehen, dass der Istdruck-Gradient zu groß ist, d.h. dass ein Druckverlauf gemäß Kurve 126 vermieden wird.

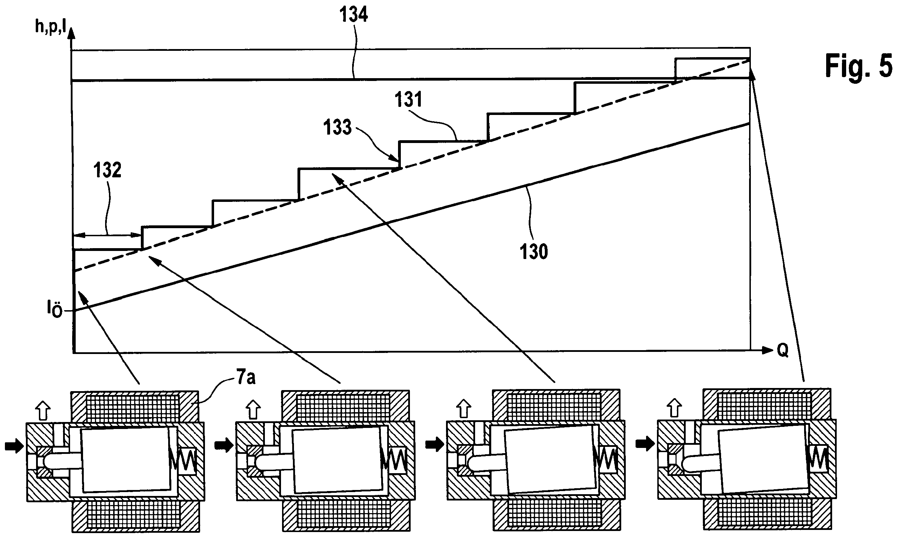

Fig. 5 veranschaulicht eine Bestimmung des kleinsten Volumenstroms $Q_{min}$ bzw. einer Ansteuerstrom-Volumenstrom-Kennlinie Q(I) des Auslassventils für konstanten Druck. In dem Diagramm der Fig. 5 sind als Funktion des Volumenstroms Q der Solldruck $p_{soll}$ der Radbremse (Kurve 134), der Ansteuerstrom I des Auslassventils (Kurve 130) und der Ventilhub h des Auslassventils (Kurve 131) dargestellt. Die gestrichelte Kurve zeigt einen effektiven Verlauf der Kurve 131. Augewählte Ventilzustände des Auslassventils sind unterhalb des Diagramms grafisch dargestellt.

Bei konstantem Radbremsdruck $p_{soll}$ (durch entsprechende Regelung der Druckbereitstellungseinrichtung) wird der Ansteuerstrom I erhöht. Bei Ansteuerströmen I von Null bis zum Öffnungsstrom $I_{\ddot{O}}$ ist das Auslassventil geschlossen, so dass der Volumenstrom Q Null ist. Ab dem Öffnungsstrom $I_{\ddot{O}}$ steigt der Volumenstrom Q mit dem Ansteuerstrom I an. Der Zusammenhang zwischen Ventilhub h und Volumenstrom Q wird durch Kurve 131 dargestellt. Aufgrund von auftretenden Reibungseffekten im Ventil (Hystereseeffekt) entsteht eine gestufte Abhängigkeit zwischen den Größen. Pfeil 132 markiert den kleinsten Volumenstrom-Sprung und damit den kleinsten Druckgradienten. Pfeil 133 markiert einen hysteresebedingten Ventilhub-Sprung und damit Volumenstrom-Sprung. Aus den zusammengehörigen Werten von Ansteuerstrom I und Volumenstrom Q ergibt sich die Ansteuerstrom-Volumenstrom-Kennlinie Q(I).

Gemäß einem weiteren Ausführungsbeispiel eines erfindungsgemäßen Verfahrens zur radindividuellen analogen Druckabbausteuerung wird wie folgt vorgegangen. Beispielhaft soll der Radbremsdruck der Radbremse 8 (FL) abgebaut werden (sog. "aktive Radbremse"). Zunächst wird der in den Radbremsen herrschende Druck (Anfangsdruck) mittels des Drucksensors 19 bestimmt. Alle Einlassventile 6a-6d werden dann geschlossen, wobei die Einlassventile 6b, 6c, 6d "fest" geschlossen werden, d.h. derart angesteuert werden, dass die Einlassventile nicht durch einen Druckaufbau der Druckbereitstellungseinrichtung überströmt werden können. Die Auslassventile 7b, 7c, 7d sind unbestromt, also geschlossen. Das Einlassventil 6a der aktiven Radbremse 8 wird "leicht" geschlossen, d.h. Einlassventil 6a wird z.B. derart angesteuert, dass es durch einen Druckaufbau der Druckbereitstellungseinrichtung überströmt werden kann. Der Ansteuerstrom I des Auslassventils 7a wird auf den dem Anfangsdruck entsprechenden Öffnungsstrom $I_\ddot{O}$ (aus der zuvor bestimmten Öffnungskennlinie) eingestellt. Die Druckbereitstellungseinrichtung 5 wird derart angesteuert (Geschwindigkeitsregelung des Aktuators der Druckbereitstellungseinrichtung), dass der Volumenstrom der Druckbereitstellungseinrichtung grösser als der Mindest-Volumenstrom $Q_{min}$ des Auslassventils 7a ist. Das von der Druckbereitstellungseinrichtung verdrängte Druckmittelvolumen überströmt das Einlassventil 6a. Bei Kenntnis der Druck-Strom-Volumenstrom-Kennfeldes $f(\triangle p,I,Q)$ des Einlassventils kann aus dem Signal des Drucksensors 19 (Bremssystemdruck P) auf den Radbremsdruck $p_R$ der Radbremse 8 geschlossen werden. Das in die Radbremse 8 einströmende Druckmittelvolumen erhöht den Radbremsdruck $p_R$ auf das Öffnungsdruckniveau des Auslassventils 7a, so dass Druckmittel aus der Radbremse abfließen kann. Ein "Abknicken" des Druckaufbaus bzw. ein sich einstellender stationärer Radbremsdruck wird mit dem Drucksensor 19 erkannt. Das Auslassventil 7a wird dann mit einem Schließpuls angesteuert, so dass das Auslassventil vollständig schließt, und der Aktuator der Druckbereitstellungseinrichtung 5 wird gestoppt. Der Vorgang kann auch mit sich ändernden Raddruckabbauvorgaben erfolgen. So kann die Öffnungskennlinie kalibriert werden. Der Volumenstrom Q durch das Auslassventil ist gleich dem berechneten Radabbauvolumenstrom plus dem Aktuatorvolumenstrom, der aus der Ansteuerung der Druckbereitstellungseinrichtung bekannt ist. Dieser Zusammenhang wird bei der Parameterermittlung genutzt. Eine Überwachung des Vorgangs kann mittels des Drucksensors 18 und des Einlassventil-Kennfeldes durchgeführt werden.

Bei bekannten Bremsanlagen, bei welchen die Druckmodulation mittels einer hochdynamischen Druckbereitstellungseinrichtung mit einem Aktuator und radindividueller Multiplexventile durchgeführt wird, erfolgt die radindividuelle Druckeinstellung an den einzelnen Radbremsen sequenziell in der Weise, dass das der einzelnen Radbremse zugeordnete Multiplexventil voll geöffnet wird und damit Druckgleichheit zwischen Radbremse und Druckbereitstellungseinrichtung hergestellt wird. Der Druckaufbau bzw. Druckabbau erfolgt mittels Aktuatorverstellung (Vor- bzw. Rückhub). Dieses Multiplex-Verfahren besitzt den Nachteil, dass bei einer komfortorientierten (d.h. langsamen) radindividuellen Vier-Radregelung prinzipbedingte signifikante Geräusch-Probleme, sog. NVH-Probleme (NHV: Noise Vibration Harshness), auftreten. Die Ursachen für die Geräuschentstehung sind im Wesentlichen darin begründet, dass der Aktuator vier unterschiedliche Drücke in sehr hoher Frequenz einzeln (nacheinander) einstellen muss, da sich sonst eine zu hohe Stufigkeit des Druckverlaufs nachteilig auf das Bremsverhalten auswirken würde. Diese hohe Frequenz erfordert sehr schnelle Reversier-Vorgänge des Aktuators, die zum einen zunächst vom Aktuator erst einmal leistbar sein müssen (hohe Kosten für den Aktuator) und zum andere zu der damit verbundenen Geräuschentstehung führen. Weiterhin müssen die Multiplexventile in schneller Folge in höchster Geschwindigkeit geöffnet und geschlossen werden. Dies ist notwendig, da erst die schnelle Betätigung der Ventile die hohe Multiplexfrequenz ermöglicht. Dies führt zu entsprechend lauten Anschlaggeräuschen innerhalb der Ventile, die sich über das Gesamtaggregat an die Fahrzeugspritzwand ausbreiten. Ebenso werden die Druckmittelsäulen in den Bremsleitungen extrem schnell beschleunigt und wieder abgebremst. Durch die Induktivität des Druckmittels entstehen die bekannten Geräuscheffekte.

Durch die Erfindung wird eine fein dosierte Regelung der Bremsdrücke der einzelnen Radbremsen bei gleichzeitig möglichst geringer Geräuschentwicklung ermöglicht.

Ein weiterer Vorteil der Erfindung besteht darin, dass ohne zusätzlichen Sensoraufwand (z.B. einen Drucksensor im Radbremskreis oder einen Spannkraftsensor in der Radbremse) eine komfortable und ausreichend genaue Druckabbausteuerung erzielt werden kann.

Die Erfindung betrifft bevorzugt eine synchrone Druckabbausteuerung mittels analoger oder analogisierter Druckregelventile 7a-7d. Analoge Druckregelventile weisen prinzipbedingt eine große Umsteuerhysterese auf. Die hohen Federvorspannkräfte und die bei niedrigen Radbremsdrücken hohen Magnetkräfte zum Öffnen der Auslassventile bewirken hohe Reibkräfte, welche die Reibungshysterese begründen. Diese Schwierigkeiten können durch eine genaue Bestimmung der verschiedenen Parameter der Auslassventile minimiert werden.

**Patentansprüche**

1. Verfahren zum Betreiben einer Bremsanlage für Kraftfahrzeuge mit

   • mehreren Radbremsen (8, 9, 10, 11), für welche radindividuelle Solldrücke ($p^n_{soll}$) vorgegeben werden,
   • einer elektrisch steuerbaren Druckbereitstellungseinrichtung (5), die einen Bremssystemdruck zur Betätigung der Radbremsen (8-11) bereitstellen kann, wobei der von der Druckbereitstellungseinrichtung (5) bereitgestellte Bremssystemdruck (P) bestimmbar ist, und
   • je Radbremse einem elektrisch ansteuerbaren Einlassventil (6a-6d) und einem zwischen Radbremse und einem Druckmittelvorratsbehälter (4) angeordneten elektrisch ansteuerbaren Auslassventil (7a-7d) zum Einstellen radindividueller Bremsdrücke ($p^n_R$), wobei zumindest ein Auslassventil (7a-7d), insbesondere jedes Auslassventil, analogisiert oder analog angesteuert ausgeführt ist und mittels einer elektrischen Ansteuergröße (In) angesteuert wird,

   wobei für das, insbesondere jedes, analogisierte oder analog angesteuerte Auslassventil (7a) mittels der Bremsanlage zumindest eine ventilspezifische Ansteuercharakteristik ($I_Ö(p_R)$, $I_s(p_R)$, $Q(I, p_R)$) bestimmt wird, wobei zum Abbau des Bremsdrucks ($p_R$) in der dem Auslassventil zugeordneten Radbremse (8) das analogisierte oder analog angesteuerte Auslassventil (7a) in Abhängigkeit der ventilspezifischen Ansteuercharakteristik angesteuert wird, und wobei ein Ansteuerkennfeld ($Q(I, p_R)$), welches den Volumenstrom (Q) durch das Auslassventil (7a) in Abhängigkeit der Ansteuergröße (I) des Auslassventils und des Bremsdrucks ($p_R$) der dem Auslassventil zugeordneten Radbremse (8) beschreibt, mittels der Druckbereitstellungseinrichtung (5) bestimmt wird.

2. Verfahren nach Anspruch 1, **dadurch gekennzeichnet, dass** das Ansteuerkennfeld ($Q(I, p_R)$) mittels einer Geschwindigkeitsregelung der Druckbereitstellungseinrichtung (5) bestimmt wird.

3. Verfahren nach Anspruch 1 oder 2, **dadurch gekennzeichnet, dass** für das, insbesondere jedes, analogisierte oder analog angesteuerte Auslassventil (7a) mittels der Bremsanlage zumindest ein ventilspezifischer Parameter ($Q_{min}$, $\dot{p}_{min}$, $\Delta t_Ö$) bestimmt wird, und dass zum Abbau des Bremsdrucks ($p_R$) in der dem Auslassventil zugeordneten Radbremse (8) das analogisierte oder analog angesteuerte Auslassventil (7a) in Abhängigkeit des ventilspezifischen Parameters angesteuert wird.

4. Verfahren nach einem der Ansprüche 1 bis 3, **dadurch gekennzeichnet, dass** mittels der Druckbereitstellungseinrichtung (5) und einer den Druck (P) der Druckbereitstellungseinrichtung messenden Druckerfassungseinrichtung (19) eine ventilspezifische Öffnungskennlinie ($I_Ö(p_R)$) des Auslassventils (7a) bestimmt wird.

5. Verfahren nach einem der Ansprüche 1 bis 4, **dadurch gekennzeichnet, dass** mittels der Druckbereitstellungseinrichtung (5) und einer den Druck (P) der Druckbereitstellungseinrichtung messenden Druckerfassungseinrichtung (19) eine ventilspezifische Schließkennlinie ($I_S(p_R)$) des Auslassventils (7) bestimmt wird.

6. Verfahren nach einem der Ansprüche 1 bis 5, **dadurch gekennzeichnet, dass** das Auslassventil (7a) zum Abbau des Bremsdrucks abwechselnd für eine erste Zeitdauer ($\Delta t_Ö$) mit einem Wert ($I_{open}$) der Ansteuergröße gleich oder oberhalb des Öffnungsstroms ($I_Ö$) des Auslassventils (7a) und für eine zweite Zeitdauer ($\Delta t_S$) mit einem Wert ($I_{closed}$) der Ansteuergröße unterhalb des Schließstroms ($I_S$) des Auslassventils (7a) angesteuert wird.

7. Verfahren nach Anspruch 6, **dadurch gekennzeichnet, dass** für die zweite Zeitdauer ($\Delta t_S$) ein Wert vorgegeben ist und dass die erste Zeitdauer ($\Delta t_Ö$) als ein ventilspezifischer Parameter mittels der Bremsanlage bestimmt wird.

8. Verfahren nach Anspruch 6 oder 7, **dadurch gekennzeichnet, dass** die erste Zeitdauer ($\Delta t_Ö$) in Abhängigkeit von einem ventilspezifischen, minimalen Druckgradient ($\dot{p}_{min}$) und einem, insbesondere anhand des vorgegebenen Solldrucks ($p_{soll}$) bestimmten, Solldruckgradient ($\dot{p}_{soll}$) bestimmt wird.

9. Verfahren nach einem der Ansprüche 1 bis 8, **dadurch gekennzeichnet, dass** ein ventilspezifischer Mindest-Volumenstrom ($Q_{min}$) oder ein ventilspezifischer, minimaler Druckgradient ($\dot{p}_{min}$) des Auslassventils (7a), insbesondere für verschiedene Bremsdrücke ($p_R$) der dem Auslassventil (7a) zugeordneten Radbremse (8), bestimmt wird.

10. Verfahren nach Anspruch 9, **dadurch gekennzeichnet, dass** ein Solldruckgradient ($\dot{p}_{soll}$) aus dem aktuellen Bremsdruck ($p_R$) und einem vorgegebenen Solldruck ($p_{soll}$) der Radbremse (8) bestimmt und mit dem Mindest-Volumenstrom ($Q_{min}$) oder dem minimalen Druckgradient ($\dot{p}_{min}$) verglichen wird, und dass in Abhängigkeit von dem Vergleich das Auslassventil (7a) angesteuert wird, insbesondere der Wert der Ansteuergröße und/oder eine Dauer einer Ansteuerung, insbesondere die erste Zeitdauer ($\Delta t_{\ddot{O}}$), gewählt wird.

11. Verfahren nach einem der Ansprüche 1 bis 10, **dadurch gekennzeichnet, dass** zur Änderung des Bremsdrucks ($p_R$) in der dem Auslassventil (7a) zugeordneten Radbremse (8) das Einlassventil (6a) der Radbremse (8) derart angesteuert wird, dass es geschlossen ist, aber überströmt werden kann, und alle anderen Einlassventile (6b, 6c, 6d) derart angesteuert werden, dass sie geschlossen sind und nicht überströmt werden können.

12. Verfahren nach Anspruch 11, **dadurch gekennzeichnet, dass** das Auslassventil (7a) mit einem Wert der Ansteuergröße etwa gleich oder um einen vorgegebenen Betrag unterhalb des Öffnungsstroms ($I_{\ddot{O}}$) angesteuert wird.

13. Verfahren nach Anspruch 12, **dadurch gekennzeichnet, dass** die Druckbereitstellungseinrichtung (5) derart angesteuert wird, dass der von der Druckbereitstellungseinrichtung abgegebene Volumenstrom größer als ein ventilspezifischer Mindest-Volumenstrom ($Q_{min}$) des Auslassventils (7a) ist.

14. Bremsanlage für Kraftfahrzeuge mit

   • mehreren Radbremsen (8, 9, 10, 11),
   • einer elektrisch steuerbaren Druckbereitstellungseinrichtung (5), die einen Bremssystemdruck zur Betätigung der Radbremsen (8-11) bereitstellen kann, wobei der bereitgestellte Bremssystemdruck (P) mittels einer Druckerfassungseinrichtung (19) bestimmbar ist,
   • einem mittels eines Bremspedals (1) betätigbaren Hauptbremszylinder (2), welcher insbesondere mit den Radbremsen trennbar (23a, 23b) verbunden ist,
   • je Radbremse einem elektrisch ansteuerbaren Einlassventil (6a-6d) und einem zwischen Radbremse und einem Druckmittelvorratsbehälter angeordneten elektrisch ansteuerbaren Auslassventil (7a-7d), wobei zumindest ein Auslassventil (7a-7d), insbesondere jedes Auslassventil, analogisiert oder analog angesteuert ausgeführt ist, und
   • einer elektronischen Steuer- und Regeleinheit (12) zur Ansteuerung der elektrisch steuerbaren Druckbereitstellungseinrichtung (5) sowie der Einlass- und Auslassventile,

   **dadurch gekennzeichnet, dass** in der elektronischen Steuer- und Regeleinheit (12) ein Verfahren gemäß einem der Ansprüche 1 bis 13 durchgeführt wird.

## Claims

1. Method for operating a brake system for motor vehicles, having

   • a plurality of wheel brakes (8, 9, 10, 11), for which wheel-specific setpoint pressures ($p^n_{soll}$) are specified,
   • an electrically controllable pressure supply device (5), which can provide a brake system pressure for actuating the wheel brakes (8-11), wherein the brake system pressure (P) provided by the pressure supply device (5) can be determined, and
   • an electrically controllable inlet valve (6a-6d) and an electrically controllable outlet valve (7a-7d), the latter being arranged between the wheel brake and a pressure medium reservoir (4), per wheel brake for setting wheel-specific brake pressures ($p^n_R$), wherein at least one outlet valve (7a-7d), in particular each outlet valve, is analogized or analog-controlled and is controlled by means of an electric control variable ($I^n$),

   wherein at least one valve-specific control characteristic ($I_{\ddot{O}}(p_R)$, $I_S(p_R)$, $Q(I,p_R)$) is determined for the analogized or analog-controlled outlet valve (7a), in particular for each such valve, by means of the brake system, wherein the analogized or analog-controlled outlet valve (7a) is controlled in accordance with the valve-specific control characteristic to reduce the brake pressure ($p_R$) in the wheel brake (8) associated with the outlet valve, and wherein a control characteristic map ($Q(I, p_R)$), which describes the volume flow (Q) through the outlet valve (7a) as a function of the control variable (I) of the outlet valve and the brake pressure ($p_R$) of the wheel brake (8) associated with the outlet valve, is determined by means of the pressure supply device (5).

2. Method according to Claim 1, **characterized in that** the control characteristic map ($Q(I, p_R)$) is determined by means of a speed control operation on the pressure supply device (5).

3. Method according to Claim 1 or 2, **characterized in that** at least one valve-specific parameter ($Q_{min}$, $\dot{p}_{min}$, $\Delta t_{\ddot{O}}$) is determined for the analogized or analog-controlled outlet valve (7a), in particular for each such valve, by means of the brake system, and **in that** the analogized or analog-controlled outlet valve (7a) is controlled in accordance with the valve-specific parameter to reduce the brake pressure ($p_R$) in the wheel brake (8) associated with the outlet valve.

4. Method according to one of Claims 1 to 3, **characterized in that** a valve-specific opening characteristic curve ($I_{\ddot{O}}(p_R)$) of the outlet valve (7a) is determined by means of the pressure supply device (5) and of a pressure detection device (19) which measures the pressure (P) of the pressure supply device.

5. Method according to one of Claims 1 to 4, **characterized in that** a valve-specific closing characteristic curve ($I_S((p_R)$) of the outlet valve (7) is determined by means of the pressure supply device (5) and of a pressure detection device (19) which measures the pressure (P) of the pressure supply device.

6. Method according to one of Claims 1 to 5, **characterized in that**, to reduce the brake pressure, the outlet valve (7a) is supplied alternately for a first time period ($\Delta t_{\ddot{O}}$) with a value ($I_{open}$) of the control variable equal to or above the opening current ($I_{\ddot{O}}$) of the outlet valve (7a) and for a second time period ($\Delta t_S$) with a value ($I_{closed}$) of the control variable below the closing current ($I_S$) of the outlet valve (7a).

7. Method according to Claim 6, **characterized in that** a value is specified for the second time period ($\Delta t_S$) and **in that** the first time period ($\Delta t_{\ddot{O}}$) is determined as a valve-specific parameter by means of the brake system.

8. Method according to Claim 6 or 7, **characterized in that** the first time period ($\Delta t_{\ddot{O}}$) is determined in accordance with a valve-specific minimum pressure gradient ($\dot{p}_{min}$) and with a setpoint pressure gradient ($\dot{p}_{soll}$), in particular a setpoint pressure gradient determined from the specified setpoint pressure ($p_{soll}$).

9. Method according to one of Claims 1 to 8, **characterized in that** a valve-specific minimum volume flow ($Q_{min}$) or a valve-specific minimum pressure gradient ($\dot{p}_{min}$) of the outlet valve (7a), particularly for different brake pressures ($p_R$) of the wheel brake (8) associated with the outlet valve (7a), is determined.

10. Method according to Claim 9, **characterized in that** a setpoint pressure gradient ($p_{soll}$) is determined from the current brake pressure ($p_R$) and a specified setpoint pressure ($p_{soll}$) of the wheel brake (8) and is compared with the minimum volume flow ($Q_{min}$) or the minimum pressure gradient ($\dot{p}_{min}$), and **in that** the outlet valve (7a) is controlled in accordance with the comparison, in particular the value of the control variable and/or a duration of a control operation, in particular the first time period ($\Delta t_{\ddot{O}}$), is chosen.

11. Method according to one of Claims 1 to 10, **characterized in that**, to change the brake pressure ($p_R$) in the wheel brake (8) associated with the outlet valve (7a), the inlet valve (6a) of the wheel brake (8) is controlled in such a way that it is closed but can be overridden, and all the other inlet valves (6b, 6c, 6d) are controlled in such a way that they are closed and cannot be overridden.

12. Method according to Claim 11, **characterized in that** the outlet valve (7a) is supplied with a value of the control variable approximately equal to the opening current ($I_{\ddot{O}}$) or below the opening current ($I_{\ddot{O}}$) by a specified amount.

13. Method according to Claim 12, **characterized in that** the pressure supply device (5) is controlled in such a way that the volume flow output by the pressure supply device is greater than a valve-specific minimum volume flow ($Q_{min}$) of the outlet valve (7a).

14. Brake system for motor vehicles, having

   • a plurality of wheel brakes (8, 9, 10, 11),
   • an electrically controllable pressure supply device (5), which can provide a brake system pressure for actuating the wheel brakes (8-11), wherein the brake system pressure (P) provided can be determined by means of a pressure detection device (19),
   • a brake master cylinder (2), which can be actuated by means of a brake pedal (1) and is connected, in particular, to the wheel brakes in a separable manner (23a, 23b),
   • an electrically controllable inlet valve (6a-6d) and an electrically controllable outlet valve (7a-7d), the latter being arranged between the wheel brake and a pressure medium reservoir, per wheel brake, wherein at least one outlet valve (7a-7d), in particular each outlet valve, is analogized or analog-controlled, and

• an electronic control and regulating unit (12) for controlling the electrically controllable pressure supply device (5), the inlet valves and the outlet valves,

**characterized in that** a method according to one of Claims 1 to 13 is carried out in the electronic control and regulating unit (12).

**Revendications**

1. Procédé de fonctionnement d'une installation de freinage pour véhicules automobiles avec :

   - plusieurs freins de roue (8, 9, 10, 11), pour lesquels des pressions théoriques ($p^n_{soll}$) individuelles pour chaque roue sont prédéfinies ;
   - un dispositif de mise à disposition de pression (5) à commande électrique pouvant mettre à disposition un système de pression de frein servant à l'actionnement des freins de roue (8-11), le système de pression de frein (P) mis à disposition par le dispositif de mise à disposition de pression (5) pouvant être déterminé ; et
   - pour chaque frein de roue une soupape d'admission (6a-6d) à excitation électrique et une soupape d'échappement (7a-7d) à excitation électrique disposée entre le frein de roue et un réservoir de moyen de pression (4) pour régler les pressions de frein ($p^n_R$) individuelles pour chaque roue, au moins une soupape d'échappement (7a-7d) étant rendue analogique ou étant commandée de façon analogique, notamment chaque soupape d'échappement, et étant commandée au moyen d'une grandeur d'excitation ($I^n$) électrique ;

   pour la soupape d'échappement (7a), notamment chaque soupape, rendue analogique ou commandée de façon analogique à l'aide de l'installation de freinage, au moins une caractéristique d'excitation ($I_ö(P_R)$, $I_S(P_R)$* $Q(I, p_R)$) spécifique à la soupape étant déterminée ; sachant que pour réduire la pression de frein ($p_R$) dans le frein de roue (8) associé à la soupape d'échappement, la soupape d'échappement (7a) rendue analogique ou commandée de façon analogique est commandée en fonction de la caractéristique d'excitation spécifique à la soupape et qu'une caractéristique d'excitation ($Q(I, p_R)$) décrivant le débit volumique (Q) traversant la soupape d'échappement (7a) en fonction de la grandeur d'excitation (I) de la soupape d'échappement et de la pression de frein ($p_R$) du frein de roue (8) associée à la soupape d'échappement est déterminée à l'aide du dispositif de mise à disposition de pression (5).

2. Procédé selon la revendication 1, **caractérisé en ce que** la caractéristique d'excitation ($Q(I, p_R)$) est déterminée au moyen d'un réglage de vitesse du dispositif de mise à disposition de pression (5).

3. Procédé selon la revendication 1 ou 2, **caractérisé en ce que** pour la soupape d'échappement (7a), rendue analogique ou commandée de façon analogique, notamment pour chaque soupape, au moins un paramètre spécifique à la soupape ($Q_{min}$, $p_{min}$, $\Delta t_ö$) est déterminé à l'aide de l'installation de freinage et que pour diminuer la pression de frein ($p_R$) dans le frein de roue (8) associé à la soupape d'échappement, la soupape d'échappement (7a) rendue analogique ou commandée de façon analogique est commandée en fonction du paramètre spécifique à la soupape.

4. Procédé selon l'une quelconque des revendications 1 à 3, **caractérisé en ce que** à l'aide du dispositif de mise à disposition de pression (5) et d'un dispositif de détection de pression (19) mesurant la pression (P) du dispositif de mise à disposition de pression, une courbe caractéristique d'ouverture ($I_ö(P_R)$), spécifique à la soupape, de la soupape d'échappement (7a) est déterminée.

5. Procédé selon l'une quelconque des revendications 1 à 4, **caractérisé en ce que** à l'aide du dispositif de mise à disposition de pression (5) et d'un dispositif de détection de pression (19) mesurant la pression (P) du dispositif de mise à disposition de pression, une courbe caractéristique de fermeture ($I_S(P_R)$), spécifique à la soupape, de la soupape d'échappement (7) est déterminée.

6. Procédé selon l'une quelconque des revendications 1 à 5, **caractérisé en ce que** la soupape d'échappement (7a) est commandée, pour réduire la pression de frein tour à tour pour une première durée ($\Delta t_ö$) avec une valeur ($I_{open}$) de la grandeur d'excitation supérieure ou égale au courant d'ouverture ($I_ö$) de la soupape d'échappement (7a) et pour une deuxième durée ($\Delta t_s$) avec une valeur ($I_{closed}$) de la grandeur d'excitation inférieure au courant de fermeture ($I_s$) de la soupape d'échappement (7a).

7. Procédé selon la revendication 6, **caractérisé en ce qu'**une valeur est prédéfinie pour la deuxième durée ($\Delta t_s$) et

que la première durée ($\Delta t_{\ddot{o}}$) est déterminée sous la forme d'un paramètre spécifique à la soupape à l'aide de l'installation de freinage.

8. Procédé selon la revendication 6 ou 7, **caractérisé en ce que** la première durée ($\Delta t_{\ddot{o}}$) est définie en fonction d'un gradient de pression ($\dot{p}_{min}$) minimal spécifique à la soupape et d'un gradient de pression théorique ($\dot{p}_{soll}$) notamment défini à l'aide de la pression théorique ($p_{soll}$) prédéfinie.

9. Procédé selon l'une quelconque des revendications 1 à 8, **caractérisé en ce qu'**un débit volumique ($Q_{min}$) minimal spécifique à la soupape ou un gradient de pression ($\dot{p}_{min}$) minimal spécifique à la soupape de la soupape d'échappement (7a), est déterminé, notamment pour différentes pressions de frein ($p_R$) du frein de roue (8) associé à la soupape d'échappement (7a).

10. Procédé selon la revendication 9, **caractérisé en ce qu'**un gradient de pression théorique ($\dot{p}_{soll}$) est déterminé à partir de la pression de frein ($p_R$) actuelle et d'une pression théorique ($p_{soll}$) prédéfinie du frein de roue (8) et comparée au débit volumique minimal ($Q_{min}$) ou au gradient de pression minimal ($\dot{p}_{min}$) et qu'en fonction de la comparaison, la soupape d'échappement (7a) est commandée, notamment la valeur de la grandeur d'excitation et/ou une durée d'une excitation, notamment la première durée ($\Delta t_{\ddot{o}}$), est choisie.

11. Procédé selon l'une quelconque des revendications 1 à 10, **caractérisé en ce que** pour faire varier la pression de frein ($p_R$) dans le frein de roue (8) associé à la soupape d'échappement (7a), la soupape d'admission (6a) du frein de roue (8) est commandée de telle sorte qu'elle soit fermée mais puisse permettre un écoulement du trop-plein et que toutes les autres soupapes d'admission (6b, 6c, 6d) sont commandées de telle sorte qu'elles soient fermées et ne puissent pas permettre un écoulement du trop-plein.

12. Procédé selon la revendication 11, **caractérisé en ce que** la soupape d'échappement (7a) est commandée avec une valeur de la grandeur d'excitation approximativement égale au courant d'ouverture ($I_{\ddot{o}}$) ou inférieure à celui-ci d'un montant prédéfini.

13. Procédé selon la revendication 12, **caractérisé en ce que** le dispositif de mise à disposition de pression (5) est commandé de telle sorte que le débit volumique fourni par le dispositif de mise à disposition de pression est supérieur à un débit volumique minimal ($Q_{min}$) spécifique à la soupape de la soupape d'échappement (7a).

14. Installation de freinage pour véhicules automobiles avec :

   - plusieurs freins de roue (8, 9, 10, 11);
   - un dispositif de mise à disposition de pression (5) à commande électrique pouvant mettre à disposition un système de pression de frein servant à l'actionnement des freins de roue (8-11), le système de pression de frein (P) mis à disposition pouvant être déterminé au moyen d'un dispositif de détection de pression (19) ;
   - un maître-cylindre de frein (2) actionnable à l'aide d'une pédale de frein (1) notamment relié de façon séparée aux freins de roue (23a, 23b) ;
   - pour chaque frein de roue une soupape d'admission (6a-6d) à excitation électrique et une soupape d'échappement (7a-7d) à excitation électrique disposée entre le frein de roue et un réservoir de moyen de pression, au moins une soupape d'échappement (7a-7d), notamment chaque soupape d'échappement, étant rendue analogique ou étant réalisée de façon à être commandée de façon analogique ; et
   - une unité de commande et de réglage (12) électronique pour exciter le dispositif de mise à disposition de pression (5) à commande électrique ainsi que les soupapes d'admission et d'échappement;

   **caractérisée en ce qu'**un procédé selon l'une quelconque des revendications 1 à 13 est réalisé dans l'unité de commande et de réglage (12) électronique.

Fig. 1

Fig. 2

Fig. 3

EP 2 822 825 B1

Fig. 4

EP 2 822 825 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10147181 A1
- WO 2011029812 A1
- WO 2007042349 A1
- WO 200505028 A1